# EUROPÄISCHE PATENTSCHRIFT

(11) **EP 2 145 985 B1**
(45) Veröffentlichungstag und Bekanntmachung des Hinweises auf die Patenterteilung: **01.04.2020**
(21) Anmeldenummer: 09165675.1
(22) Anmeldetag: 16.07.2009
(51) Int. Cl.: C25B 11/12, C02F 1/461

(54) **Elektrode für die Elektrolyse**
Electrode for electrolysis
Electrode pour électrolyse

(30) Priorität: 17.07.2008 DE 102008033567
(43) Veröffentlichungstag der Anmeldung: 20.01.2010
(73) Patentinhaber: Schunk Kohlenstofftechnik GmbH, 35452 Heuchelheim (DE)
(72) Erfinder: Reynvaan, Conrad, Dr., 4822, Bad Goisern (AT); Schneweis, Stefan, Dr., 61279, Grävenwiesbach (DE); Reiser, Klaus, 4820, Bad Ischl (AT)
(74) Vertreter: advotec.

(56) Entgegenhaltungen:
- EP-A- 1 640 479
- EP-A2- 1 703 001
- DE-U1- 29 916 126
- US-A- 5 900 127

## Beschreibung

Die vorliegende Erfindung betrifft eine Elektrode für die Elektrolyse nach dem Oberbegriff des Anspruchs 1.

Seit langem ist es bekannt, einen Elektrolysevorgang in Systemen wässriger Lösung dazu zu nutzen, um Wasserstoff, Ozon, Wasserstoffperoxid und weitere Sauerstoffverbindungen zu erzeugen. In weiteren Anwendungen ist es bekannt, das Elektrolyseverfahren bzw. die bei der Elektrolyse gegebenenfalls entstehende Sauerstoffüberspannung, die es ermöglicht, wässrige Lösungen mit einem höheren Potential zu behandeln als dies zur Erzeugung der vorstehend beispielhaft genannten Stoffe notwendig wäre, zu nutzen, um bei der Elektrolyse entstehende Oxidationsmittel zur Abwasserbehandlung, insbesondere zur Keimbehandlung, einzusetzen.

Als Werkstoff einer Elektrode (Anode) für die Elektrolyse, die zur Durchführung einer derartigen Oxidation der wässrigen Lösung verwendet wird, wird in jüngster Zeit polykristalliner Diamant oder auch diamantähnlicher Kohlenstoff eingesetzt, der als Beschichtung auf ein Elektrodensubstrat aus einem metallischen Werkstoff aufgebracht ist. Diamantähnlicher Kohlenstoff ist den Fachkreisen als DLC (diamond like carbon) bekannt.

Aus der EP 1 468 965 B1 ist es bekannt, ein Diamantpulver auf ein metallisches Elektrodensubstrat aufzutragen, um eine geeignete Elektrode herzustellen.

Die EP 0 994 074 A1 zeigt eine Diamantelektrode für die Elektrolyse, die einen Basiskörper aufweist, der von einer Diamantschicht überzogen ist, die durch CVD (Chemical Vapour Deposition) hergestellt ist.

Unabhängig von der unterschiedlichen Art zur Erzeugung einer Beschichtung des Elektrodensubstrats mit polykristallinem Diamant weisen die bekannten Elektroden eine Struktur auf, bei der die Diamantbeschichtung auf einem metallischen Elektrodensubstrat aufgebracht ist.

Aus der unmittelbaren Beschichtung des metallischen Elektrodensubstrats mit polykristallinem Diamantmaterial können sich im Betrieb der als Anode verwendeten Elektrode Fehlstellen in der Beschichtung ergeben, die zu hohen lokalen Strömen und einer daraus resultierenden thermischen Wechsellast der Elektrode führen können. Aufgrund der sehr unterschiedlichen Temperaturausdehnungskoeffizienten von Diamant und Metall kann es zur Ausbildung von Mikrorissen in der Metalloberfläche kommen, die das Metall besonders exponiert den bei der Elektrolyse ablaufenden elektrochemischen Prozessen aussetzen. Die Folge hiervon ist eine verstärkte Ausbildung von Fehlstellen in der Beschichtung, die bis hin zur vollständigen Zerstörung der Elektrode führen können, so dass aufgrund einer entsprechend reduzierten Lebensdauer ein häufiger Austausch der bekannten Diamantelektroden notwendig wird.

Aus der EP 1 703 001 A2 ist eine Elektrode für die Elektrolyse bekannt, die das Elektrodensubstrat mit einer darauf aufgebrachten Beschichtung aus einem elektrisch leitfähigen Diamantmaterial aufweist. Zwischen dem Grundkörper und der Diamantbeschichtung ist durch eine Politur der Oberfläche des Grundkörpers eine Kontaktschicht ausgebildet, die die Haftung zwischen dem aus Graphit gebildeten Grundkörper des Elektrodensubstrats und der Diamantbeschichtung verbessern soll.

Die DE 299 16 126 U1 offenbart eine Elektrode mit einem Elektrodensubstrat und eine Beschichtung mit einem Diamantmaterial, wobei das Elektrodensubstrat aus einem Grundkörper aus Kohlenstoffmaterial besteht und eine die Beschichtung tragende Kontaktschicht des Elektrodensubstrats aus Siliziumcarbid besteht. Die Herstellung der Elektrodenbeschichtung erfolgt durch ein CVD-Verfahren.

Die US 5 900 127 A offenbart ebenfalls eine Elektrode mit einem Elektrodensubstrat aus einem Grundkörper aus Kohlenstoffmaterial und einer Beschichtung mit einem Diamantmaterial, wobei eine die Beschichtung tragende Kontaktschicht des Elektrodensubstrats aus Siliziumcarbid besteht.

Der Erfindung liegt daher die Aufgabe zugrunde, eine Elektrode für die Elektrolyse vorzuschlagen, die sich gegenüber den bekannten Elektroden durch eine höhere Zuverlässigkeit im Betrieb und eine erhöhte Lebensdauer auszeichnet.

Zur Lösung dieser Aufgabe weist die erfindungsgemäße Elektrode die Merkmale des Anspruchs 1 auf.

Die erfindungsgemäße Elektrode weist ein Elektrodensubstrat auf, das aus einem Grundkörper aus Kohlenstoffmaterial besteht und zumindest eine die Beschichtung tragende Kontaktschicht aus einem nicht metallischen, elektrisch leitfähigen Werkstoff aufweist.

Bei der erfindungsgemäßen Elektrode wird anstatt eines metallischen Elektrodensubstrats ein Elektrodensubstrat aus einem Kohlenstoffmaterial verwendet, das schon aufgrund seiner Artverwandtschaft mit der Beschichtung aus Diamant einen wesentlich geringeren Unterschied im Temperaturkoeffizienten aufweist, als dies bei einer Paarung Metall-Diamant der Fall ist. Auch die die Grenzschicht zwischen dem Grundkörper und der Beschichtung bildende Kontaktschicht des Elektrodensubstrats besteht aus einem nicht-metallischen Werkstoff, der zwar elektrisch leitfähig ist, jedoch ebenfalls nicht den im Verhältnis zum Temperaturkoeffizienten des Diamants ungünstigen Temperaturkoeffizienten von Metall aufweist. Zur Erhöhung der Leitfähigkeit ist es vorteilhaft, wenn der Diamant bzw. der diamantähnliche Kohlenstoff mit Bor dotiert ist.

Die erfindungsgemäße Elektrode weist einen Grundkörper auf, der insbesondere hinsichtlich seiner Leitfähigkeit und der Beschichtungsfähigkeit im Kontaktbereich zum polykristallinem Diamant oder DLC durchaus mit einen metallischen Elektrodensubstrat vergleichbar ist, jedoch ohne die sich im Falle eines Elektrodensubstrats aus Metall ergebenden materialspezifischen Nachteile, die insbesondere auf den Temperaturkoeffizienten von Metall zurückzuführen sind. Erfindungsgemäß wird die Beschichtungsfähigkeit bzw. die Adhäsion zur Beschichtung und damit das Risiko der Ausbildung von Fehlstellen durch eine reduzierte Porengröße, in Verbindung mit einer geglätteten Oberfläche der Kontaktschicht, verbessert bzw. reduziert.

Wenn gemäß einer bevorzugten Ausführungsform die Kontaktschicht so gestaltet ist, dass sie eine Rautiefe Rₐ < 15 µm oder besonders bevorzugt eine maximale Rautiefe < 15 µm aufweist, ist ein Elektrodensubstrat gebildet, das sich einerseits aufgrund des Kohlenstoffmaterials durch eine gute elektrische Leitfähigkeit mit im Vergleich zum Metall relativ geringem Temperaturkoeffizienten auszeichnet und andererseits durch die mit geringer Rautiefe gestaltete Oberfläche der Kontaktschicht die Ausbildung von Poren im Kontaktbereich zur Beschichtung mit polykristallinem Diamantmaterial oder DLC vermeidet, so dass die Ausbildung on Fehlstellen in der Beschichtung und Rissen im Elektrodensubstrat besonders nachhaltig vermieden werden.

Bei einer bevorzugten Ausführungsform der Elektrode ist das Elektrodensubstrat aus einem Grundkörper aus Glaskohlenstoff mit einer durch eine insbesondere durch Polieren nachbearbeitete Oberfläche des Grundkörpers gebildeten Kontaktschicht gebildet. Bei dieser Ausführungsform besteht demnach der Grundkörper und die Kontaktschicht aus ein und demselben Material, wobei die für die Kontaktschicht wesentlichen Eigenschaften durch eine Oberflächenbehandlung des Grundkörpers erzielt sind. Im Ergebnis kann somit bei einer derartigen Ausführungsform die Beschichtung mit polykristallinem Diamantmaterial oder DLC unmittelbar auf den Grundkörper selbst erfolgen, ohne das die Kontaktschicht durch eine aus einem weiteren Material gebildete Zwischenschicht hergestellt sein müsste.

Gemäß einer weiteren vorteilhaften Ausführungsform ist die Kontaktschicht aus einer auf dem Grundkörper ausgebildeten Beschichtung aus einem keramischen Werkstoff, insbesondere einem Karbid und vorzugsweise Siliziumcarbid gebildet. Dabei kann die Beschichtung durch einen nachträglichen Auftrag einer Karbidschicht auf den Grundkörper des Elektrodensubstrats erfolgen, oder es kann auch eine Umwandlung des aus einem Kohlenstoffmaterial gebildeten Grundkörpers in einem Außenbereich erfolgen, derart, dass durch diese Umwandlung im Außenbereich des Grundkörpers beispielsweise Siliziumcarbid ausgebildet wird.

Zur Erzielung der gewünschten elektrischen Leitfähigkeit der Beschichtung kann das Karbid mit einem Halbleiter dotiert sein, wie beispielsweise Bor.

In Versuchen hat sich auch herausgestellt, dass eine Dotierung mit Stickstoff auch zur Herstellung der gewünschten elektrischen Leitfähigkeit der Beschichtung führen kann.

Als besonders vorteilhaft hinsichtlich der Lebensdauer und Leistungsfähigkeit der Elektrode hat es sich herausgestellt, wenn der Grundkörper des Elektrodensubstrats aus einem Graphitmaterial mit einer Dichte (Rohdichte) kleiner als 2,1 g/cm³ besteht. Besonders gute Ergebnisse konnten erzielt werden, bei Verwendung eines Graphitmaterials für das Elektrodensubstrat mit einer Dichte zwischen 1,6 und 1,85 g/cm³.

Hinsichtlich der Schichtdicke der Beschichtung mit Siliziumcarbid hat sich eine Schichtstärke < 150 µm als vorteilhaft herausgestellt. Besonders vorteilhaft ist eine Schichtdicke zwischen 0,2 µm und 100 µm.

Nachfolgend werden anhand der Zeichnungen bevorzugte Ausführungsformen der Elektrode näher erläutert.

Es zeigen:
- **Fig. 1:**: eine Elektrode in einer ersten Ausführungsform;
- **Fig. 2:**: eine Elektrode in einer zweiten Ausführungsform;
- **Fig. 3:**: eine Elektrode in einer dritten Ausführungsform.

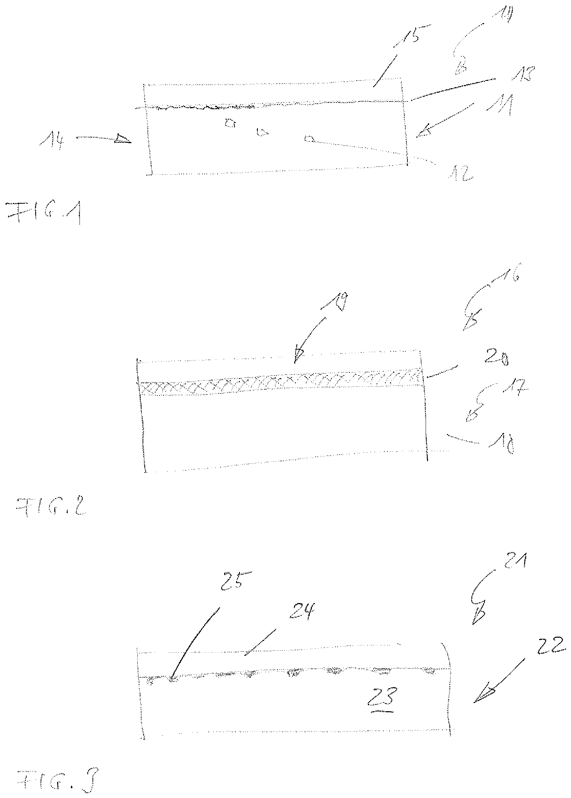

**Fig. 1** zeigt eine Elektrode 10 mit einem Elektrodensubstrat 11, das aus einem Glaskohlenstoff gebildet ist, der eine definierte Porosität aufweist. Im vorliegenden Fall weist der Glaskohlenstoff des Elektronensubstrats 11 Poren 12 mit einer maximalen Porengröße bzw. einem maximalen Porendurchmesser von 12 µm auf. Bei der in **Fig. 1** dargestellten Elektrode 10 ist eine Kontaktschicht 13 zwischen einem Grundkörper 14 des Elektrodensubstrats 11 und einer Beschichtung 15 aus einer polierten Oberfläche des Elektrodensubstrats 11 gebildet, derart, dass in Folge des Poliervorgangs Poren im Bereich der Oberfläche eingeebnet bzw. durch einen beim Poliervorgang erzeugten Kohlenstoffabrieb zumindest teilweise verfüllt sind. Im Ergebnis ergibt sich eine Oberflächenrauheit Rₐ der Oberfläche des Elektrodensubstrats 11, die kleiner ist als die Größe der Poren 12.

**Fig. 2** zeigt eine Elektrode 16, die ein Elektrodensubstrat 17 mit einem Grundkörper 18 aus einem Kohlenstoffmaterial, insbesondere Graphit, aufweist, wobei der Grundkörper eine Dichte von 1,6 g/cm³ aufweist. Zwischen dem Grundkörper 18 und einer Beschichtung 19 aus polykristallinem Diamantmaterial befindet sich eine Kontaktschicht 20. Die Kontaktschicht 20 besteht aus einem mit Bor dotiertem Siliziumcarbid.

**Fig. 3** zeigt eine Elektrode 21, die ein Elektrodensubstrat 22 aufweist mit einem Grundkörper 23, der angrenzt an eine Beschichtung 24 aus polykristallinem Diamantmaterial. Im Fall der Elektrode 21 ist eine Kontaktschicht 25 aus einem der Beschichtung 24 zugewandten Oberflächenbereich des Grundkörpers 23 gebildet, der eine Imprägnierung mit einem keramischen Werkstoff, wie beispielsweise Siliziumcarbid, aufweist. In Folge der Imprägnierung weist die Kontaktschicht 25 eine im Vergleich zur Porosität des Grundkörpers 23 verringerte Porosität und damit auch reduzierte Oberflächenrauheit Rₐ auf.

## Patentansprüche

1. Elektrode (10, 16, 21) für die Elektrolyse mit einem Elektrodensubstrat (11, 17, 22) und einer Beschichtung (15, 19, 24) des Elektrodensubstrats mit einem polykristallinen Diamantmaterial oder einem diamantähnlichem Kohlenstoff, wobei das Elektrodensubstrat aus einem Grundkörper (14, 18, 23) aus Kohlenstoffmaterial besteht und zumindest eine die Beschichtung tragende Kontaktschicht (13, 20, 25) des Elektrodensubstrats aus einem nicht metallischen, elektrisch leitfähigen Werkstoff besteht,
**dadurch gekennzeichnet,**
**dass** die Kontaktschicht (13, 20, 25) eine gegenüber dem Grundkörper reduzierte Porengröße aufweist, derart,
**dass** die Kontaktschicht (13, 20, 25) eine geglättete Oberfläche aufweist.

2. Elektrode nach einem der vorangehenden Ansprüche,
**dadurch gekennzeichnet,**
**dass** die Kontaktschicht (13, 20, 25) eine Oberfläche mit einer Rautiefe Rₐ < 15 µm aufweist.

3. Elektrode nach Anspruch 1 oder 2,
**dadurch gekennzeichnet,**
**dass** das Elektrodensubstrat (11) aus einem Grundkörper (14) aus Glaskohlenstoff mit einer durch eine nachbearbeitete Oberfläche des Grundkörpers gebildeten Kontaktschicht (13) gebildet ist.

4. Elektrode nach einem der Ansprüche 1 oder 2,
**dadurch gekennzeichnet,**
**dass** die Kontaktschicht (20) aus einer auf den Grundkörper (18) aufgebrachten Beschichtung aus einem Karbid gebildet ist.

5. Elektrode nach Anspruch 4,
**dadurch gekennzeichnet,**
**dass** die Kontaktschicht (20) aus Siliziumkarbid gebildet ist.

6. Elektrode nach Anspruch 4 oder 5,
**dadurch gekennzeichnet,**
**dass** zur Erzielung der elektrischen Leitfähigkeit der Beschichtung das Karbid mit einem Halbleiter dotiert ist.

7. Elektrode nach Anspruch 6,
**dadurch gekennzeichnet,**
**dass** das Karbid mit Bor dotiert ist.

8. Elektrode nach einem der Ansprüche 4 bis 6,
**dadurch gekennzeichnet,**
**dass** das Karbid mit Stickstoff dotiert ist.

9. Elektrode nach einem der vorangehenden Ansprüche,
**dadurch gekennzeichnet,**
**dass** das Kohlenstoffmaterial des Grundkörpers aus Graphit mit einer Dichte < 2.1 g/cm³ besteht.

10. Elektrode nach Anspruch 9,
**dadurch gekennzeichnet,**
**dass** das Kohlenstoffmaterial eine Dichte zwischen 1,6 und 1,85 g/cm³ aufweist.

11. Elektrode nach einem der vorangehenden Ansprüche,
**dadurch gekennzeichnet,**
**dass** die Schichtdicke der Beschichtung (13, 20, 25) < 150 µm ist.

12. Elektrode nach Anspruch 11,
**dadurch gekennzeichnet,**
**dass** die Schichtdicke der Kontaktschicht (13, 20, 25) zwischen 0,2 µm und 100 µm beträgt.

## Claims

1. An electrode (10, 16, 21) for electrolysis comprising an electrode substrate (11, 17, 22) and a coating (15, 19, 24) of the electrode substrate with a polycrystalline diamond material or a diamond-like carbon, the electrode substrate consisting of a base body (14, 18, 23) of carbon material and at least one contact layer (13, 20, 25) of the electrode substrate, which carries the coating, consisting of a non-metallic, electrically conductive material
**characterised in that**
the contact layer (13, 20, 25) has a reduced pore size compared to the base body in such a manner
that the contact layer (13, 20, 25) has a smoothed surface.

2. The electrode according to claim 1,
**characterised in that**
the contact layer (13, 20, 25) has a surface having a roughness depth Rₐ < 15 µm.

3. The electrode according to claim 1 or 2,
**characterised in that**
the electrode substrate (11) is formed from a base body (14) of glassy carbon with a contact layer (13) formed by a finished surface of the base body.

4. The electrode according to any one of the claims 1 or 2,
**characterised in that**
the contact layer (20) is formed from a coating of a carbide applied to the base body (18).

5. The electrode according to claim 4,
**characterised in that**
the contact layer (20) is formed from silicon carbide.

6. The electrode according to claim 4 or 5,
**characterised in that**
in order to achieve the electrical conductivity of the coating, the carbide is doped with a semiconductor.

7. The electrode according to claim 6,
**characterised in that**
the carbide is doped with boron.

8. The electrode according to one of the claims 4 to 6,
**characterised in that**
the carbide is doped with nitrogen.

9. The electrode according to any one of the preceding claims,
**characterised in that**
the carbon material of the base body consists of graphite having a density < 2.1 g/cm³.

10. The electrode according to claim 9,
**characterised in that**
the carbon material has a density between 1.6 and 1.85 g/cm³.

11. The electrode according to any one of the preceding claims,
**characterised in that**
the layer thickness of the coating (13, 20, 25) is < 150 µm.

12. The electrode according to claim 11,
**characterised in that**
the layer thickness of the coating (13, 20, 25) is between 0.2 µm and 100 µm.

## Revendications

1. Électrode (10, 16, 21) pour l'électrolyse comprenant un substrat d'électrode (11, 17, 22) et un revêtement (15,19, 24) du substrat d'électrode avec un matériau de diamant polycristallin ou un carbone de type diamant, dans lequel le substrat d'électrode consiste en un corps de base (14, 18, 23) d'un matériau de carbone et au moins une couche de contact (13, 20, 25) du substrat d'électrode portant le revêtement consiste en un matériau non métallique et électriquement conducteur,
**caractérisé en ce que**
la couche de contact (13, 20, 25) a une taille de pores réduite en comparaison du corps de base de manière que la couche de contact (13, 20, 25) a une surface lissée.

2. Électrode selon la revendication 1,
**caractérisé en ce que**
la couche de contact (13, 20, 25) a une surface ayant une rugosité de surface Rₐ < 15 µm.

3. Électrode selon la revendication 1 ou 2,
**caractérisé en ce que**
le substrat d'électrode (11) est formé d'un corps de base (14) de carbone vitreux avec une couche de contact (13) formée par une surface finie du corps de base.

4. Électrode selon l'une quelconques des revendications 1 ou 2,
**caractérisé en ce que**
la couche de contact (20) est formée d'un revêtement d'un carbure appliqué sur le corps de base (18).

5. Électrode selon la revendication 4,
**caractérisé en ce que**
la couche de contact (20) est formée d'un carbure de silicium.

6. Électrode selon la revendication 4 ou 5,
**caractérisé en ce que**
le carbure est dopé à un semi-conducteur afin d'atteindre la conductibilité électrique du revêtement.

7. Électrode selon la revendication 6,
**caractérisé en ce que**
le carbure est dopé au bore.

8. Électrode selon l'une quelconque des revendications 4 à 6,
**caractérisé en ce que**
le carbure est dopé à l'azote.

9. Électrode selon l'une quelconque des revendications précédentes,
**caractérisé en ce que**
le matériau de carbone du corps de base consiste en graphite ayant une densité de < 2,1 g/cm³.

10. Électrode selon la revendication 9,
**caractérisé en ce que**
le matériau de carbone a une densité entre 1,6 et 1,85 g/cm³.

11. Électrode selon l'une quelconque des revendications précédentes,
**caractérisé en ce que**
l'épaisseur de couche du revêtement (13, 20, 25) est < 150 µm.

12. Électrode selon la revendication 11,
**caractérisé en ce que**
l'épaisseur de la couche de contact (13, 20, 25) est entre 0,2 µm et 100 µm.
